# EUROPÄISCHE PATENTSCHRIFT

(11) **EP 2 935 946 B1**
(45) Veröffentlichungstag und Bekanntmachung des Hinweises auf die Patenterteilung: **29.03.2017**
(21) Anmeldenummer: 13791780.3
(22) Anmeldetag: 11.11.2013
(51) Int. Cl.: F16H 59/02, F16H 59/10, G05G 1/04, G05G 1/06

(54) **SCHALTHEBELVORRICHTUNG FÜR EIN FAHRZEUGGETRIEBE, AUSWERTEVORRICHTUNG FÜR EINE SCHALTHEBELVORRICHTUNG UND VERFAHREN ZUR ELEKTRONISCHEN ANSTEUERUNG EINER FAHRZEUGVORRICHTUNG**
GEAR CHANGE LEVER DEVICE FOR A VEHICLE GEARING, EVALUATION DEVICE FOR A GEAR CHANGE LEVER DEVICE AND METHOD FOR THE ELECTRONIC ACTIVATION OF A VEHICLE DEVICE
DISPOSITIF DE LEVIER DE VITESSES POUR BOÎTE DE VITESSES DE VÉHICULE, SYSTÈME D'ÉVALUATION POUR DISPOSITIF DE LEVIER DE VITESSES ET PROCÉDÉ DE COMMANDE ÉLECTRONIQUE D'UN DISPOSITIF DE VÉHICULE

(30) Priorität: 18.12.2012 DE 102012223505
(43) Veröffentlichungstag der Anmeldung: 28.10.2015
(73) Patentinhaber: ZF Friedrichshafen AG, 88046 Friedrichshafen (DE)
(72) Erfinder: PFEIFER, Ralf, 49356 Diepholz (DE)
(86) Internationale Anmeldenummer: PCT/EP2013/073465
(87) Internationale Veröffentlichungsnummer: WO 2014/095156

(56) Entgegenhaltungen:
- EP-A1- 1 541 903
- EP-A1- 1 980 441
- EP-A2- 2 017 688
- WO-A1-2013/097983
- WO-A2-2012/110179
- DE-A1-102008 056 250

## Beschreibung

Schalthebelvorrichtung für ein Fahrzeuggetriebe mit einer Halterung, einem an der Halterung bewegbar gelagerten und eine Grifffläche umfassenden Schalthebel, der in vorgegebene Schalthebelstellungen bewegbar ist, einer Sensorvorrichtung, mittels welcher die aktuelle Schalthebelstellung erfassbar ist, und einer mit der Sensorvorrichtung elektronisch gekoppelten Auswertevorrichtung zum Steuern des Getriebes, mittels welcher im Zusammenwirken mit der Sensorvorrichtung ein Wechsel der Schalthebelstellung erkennbar ist.

Die internationale Patentschrift WO2012/110179, welche alle Merkmale des Oberbegriffs des Anspruchs 1 zeigt, offenbart beispielsweise ein Fahrzeug mit einem Getriebe, einem Getriebesteuergerät, das elektrisch mit dem Getriebe verbunden ist, und einer von Hand betätigbaren Wähleinrichtung, die elektrisch mit dem Getriebesteuergerät verbunden ist und die zum Anwählen verschiedener Zustände des Getriebes vorgesehen ist, wobei eine Sensorik vorgesehen ist, mittels der detektierbar ist, ob bei einer Betätigung der Wähleinrichtung die Wähleinrichtung von einem menschlichen Körperteil oder in anderer Weise betätigt wird

Weiterhin offenbart die europäische Patentanmeldung EP 1 980 441 A1 ein Fahrzeug, insbesondere ein Kettenfahrzeug, mit einem Handsteuergerät zur Steuerung von Fahrfunktionen des Fahrzeugs und/oder Zusatzfunktionen des Fahrzeugs, wobei das Handsteuergerät eine Basis und einen gegenüber der Basis beweglichen Griff aufweist, der zum Zweck der Steuerung mindestens um eine im Wesentlichen horizontalen Schwenkachse schwenkbar ausgebildet ist, wobei der Griff eine Berührzone zum Umfassen mit einer Handinnenfläche und das Handsteuergerät mindestens ein Berührungssensor aufweist, der zur Ermittlung einer Berührung des Griffs durch einen Fahrzeugführer ausgebildet ist.

Derartige Schalthebelvorrichtungen werden in Kraftfahrzeugen eingesetzt und haben sich grundsätzlich bewährt. Allerdings können Sicherheitsrisiken bei einer fehlerhaften Ansteuerung des Getriebes durch die Schalthebelvorrichtung auftreten. Ein Beispiel für ein solches Sicherheitsrisiko geht von einem Fahrer (Starthelfer) aus, der mit seinem Fahrzeug (Hilfsfahrzeug) einem anderen Fahrzeug Starthilfe geben möchte. Während eine Hilfsperson den Motor (und damit den Generator) des Hilfsfahrzeugs auf eine höhere Drehzahl bringt, verursacht das Anklemmen der Polzangen an dem anderen Fahrzeug durch den Starthelfer Spannungsschwankungen, die bei der Schalthebelvorrichtung fehlerbedingt eine Abgabe des Befehls zum Einlegen eines Gangs an das Getriebe auslösen könnten. Wenn das Getriebe dem Schaltbefehl folgt, besteht Gefahr für Leib und Leben des Starthelfers.

Ausgehend hiervon liegt der Erfindung die Aufgabe zugrunde, die Gefahr einer fehlerhaften Ansteuerung des Getriebes verringern zu können.

Diese Aufgabe wird durch eine Schalthebelvorrichtung nach Anspruch 1 gelöst. Ferner wird diese Aufgabe durch eine Auswertevorrichtung nach Anspruch 14 und einem Verfahren zur elektronischen Ansteuerung einer Fahrzeugvorrichtung nach Anspruch 15 gelöst. Bevorzugte Weiterbildungen der Schalthebelvorrichtung, der Auswertevorrichtung und des Verfahrens sind in den Unteransprüchen und in der nachfolgenden Beschreibung gegeben.

Die Schalthebelvorrichtung für ein Fahrzeuggetriebe weist eine Halterung, einen an der Halterung bewegbar gelagerten und eine Grifffläche umfassenden Schalthebel, der in vorgegebene Schalthebelstellungen bewegbar ist, eine Sensorvorrichtung, mittels welcher die aktuelle Schalthebelstellung erfassbar ist, eine mit der Sensorvorrichtung gekoppelte Auswertevorrichtung zum Steuern des Getriebes, mittels welcher im Zusammenwirken mit der Sensorvorrichtung ein Wechsel der Schalthebelstellung erkennbar ist, und wenigstens einen mit der Auswertevorrichtung elektronisch gekoppelten und an dem Schalthebel im Bereich der Grifffläche angeordneten Berührungssensor auf, mittels welchem insbesondere eine menschliche Berührung der Grifffläche erfassbar und Informationen über den Berührungszustand der Grifffläche an die Auswertevorrich

tung abgebbar sind, wobei die Auswertevorrichtung (9) eingerichtet ist, einen Referenzwert für die Empfindlichkeit des Berührungssensors (16) auf Basis der Informationen über den Berührungszustand bei einer Berührung der Grifffläche (15) festzulegen und zu speichern, nachfolgend einen Empfindlichkeitswert auf Basis der Informationen über den Berührungszustand bei einer weiteren Berührung der Grifffläche (15) festzulegen, und einen Vergleich zwischen dem Referenzwert und dem Empfindlichkeitswert zum Festlegen einer Notwendigkeit der Übermittlung eines elektronischen Ansteuersignals auszuwerten.

Die Auswertevorrichtung erhält durch die Informationen über den Berührungszustand eine zusätzliche Möglichkeit zur Plausibilisierung der Zulässigkeit eines Wechsels der Schalthebelstellung. Erkennt die Auswertevorrichtung, dass ein Wechsel der Schalthebelstellung unzulässig ist, wird sie das Getriebe nicht zu einem Wechsel seines Schalzustands ansteuern. Insbesondere ist ein Wechsel der Schalthebelstellung unzulässig, wenn keine menschliche Berührung der Grifffläche vorliegt. Vorzugsweise umfassen die Informationen über den Berührungszustand wenigstens eine Information darüber, ob ein berührter Zustand oder ein berührungsfreier Zustand der Grifffläche vorliegt. Weiter bevorzugt liegt ein berührter Zustand ausschließlich bei einer menschlichen Berührung vor. Sofern für dieses bevorzugte Ausführungsform keine menschliche Berührung erkannt wird, liegt ein berührungsfreier Zustand vor. Bei dem eingangs genannten Beispiel müssten die Spannungsschwankungen somit nicht nur zur Signalisierung eines fehlerhaften Wechsels der Schalthebelstellung, sondern auch zu einer Signalisierung eines fehlerhaften Berührungszustands der Grifffläche führen. Das gleichzeitige Auftreten mehrerer Fehler ist aber unwahrscheinlicher als das Auftreten eines einzigen Fehlers, sodass die Sicherheit erhöht ist.

Die Schalthebelvorrichtung ist bevorzugt in ein Fahrzeug eingebaut. Insbesondere ist die Halterung mit einem Fahrzeugaufbau des Fahrzeugs fest verbunden. Das Fahrzeug umfasst vorzugsweise das Fahrzeuggetriebe. Die Schalthebelvorrichtung kann für Rechtslenker- und Linkslenker-Fahrzeuge unterschiedlich ausgebildet sein. Alternativ ist es möglich, die Schalthebelvorrichtung für Rechtslenker-und Linkslenker-Fahrzeuge einheitlich auszubilden.

Der Schalthebel kann einen Schaltknauf umfassen, an dem die Grifffläche vorgesehen ist. Der Schaltknauf wird insbesondere dem Schalthebel zugerechnet. Die Grifffläche ist bevorzugt ergonomisch ausgebildet, insbesondere an die Anatomie der menschlichen Handfläche angepasst. Beispielsweise umfasst der Schalthebel einen Pistolengriff mit Fingerkontur, der vorzugsweise durch den Schaltknauf gebildet ist. Sofern der Begriff "Handfläche" verwendet wird, ist darunter insbesondere die Handinnenfläche zu verstehen.

Gemäß einer Ausgestaltung kann das Getriebe unterschiedliche Schaltzustände annehmen. Bevorzugt umfasst das Getriebe mehrere Gangstufen. Diese Gangstufen umfassen z. B. einen oder mehrere Vorwärtsgänge sowie einen Rückwärtsgang. Insbesondere sind den Schaltzuständen jeweils eine oder mehrere der Gangstufen zugeordnet. Bei einem Automatikgetriebe sind z. B. einem der Schaltzustände mehrere oder alle Vorwärtsgänge zugeordnet, wohingegen einem anderen der Schaltzustände lediglich der Rückwärtsgang zugeordnet ist. Ferner umfasst das Getriebe bevorzugt einen Leerlauf. Insbesondere ist dem Leerlauf einer der Schaltzustände zugeordnet. Zusätzlich kann dem Getriebe eine Parkstellung zugeordnet sein, in welcher insbesondere die Fahrzeugbremsen betätigt werden. Die Parkstellung kann, muss aber keinen Schaltzustand des Getriebes bilden. Wird das Getriebe in der Parkstellung mechanisch blockiert, bildet die Parkstellung insbesondere einen Schaltzustand des Getriebes. Jedem Schaltzustand ist vorzugsweise eine der Schalthebelstellungen zugeordnet. Bevorzugt ist auch der Parkstellung eine der Schalthebelstellungen zugeordnet. Das Getriebe ist insbesondere ein Automatikgetriebe. Vorteilhaft umfasst das Getriebe ein Getriebesteuergerät. Das Getriebesteuergerät bildet insbesondere eine steuerbare Stellvorrichtung, mittels welcher ein Wechsel des Schaltzustands des Getriebes herbeiführbar ist.

Bevorzugt ist das Getriebe, insbesondere das Getriebesteuergerät des Getriebes, mittels der Auswertevorrichtung steuerbar, vorzugsweise in Abhängigkeit von dem Berührungstand der Grifffläche und/oder von mindestens einem anderen Parameter. Der mindestens eine andere Parameter umfasst oder bildet insbesondere die aktuelle Schalthebelstellung des Schalthebels und/oder den aktuellen Schaltzustand des Getriebes und/oder eine Fahrzeuggeschwindigkeit und/oder eine Fahrtrichtung. Vorteilhaft ist mittels der Auswertevorrichtung, insbesondere in Abhängigkeit von dem Berührungszustand der Grifffläche und/oder von dem mindestens einen anderen Parameter, wenigstens ein Steuersignal (Schaltbefehl) für das Getriebe erzeugbar. Bevorzugt ist das Steuersignal von der Auswertevorrichtung an das Getriebe, insbesondere an das Getriebesteuergerät des Getriebes, abgebbar. Mittels des Steuersignals ist bevorzugt ein Wechsel des Schaltzustands des Getriebes herbeiführbar. Insbesondere ist mittels des Getriebesteuergeräts in Abhängigkeit von dem Steuersignal ein Wechsel des Schaltzustands des Getriebes herbeiführbar. Vorzugsweise ist die Auswertevorrichtung mit dem Getriebe, insbesondere mit dem Getriebesteuergerät des Getriebes, gekoppelt. Die Auswertevorrichtung kann aber auch mit dem Getriebesteuergerät kombiniert ausgebildet sein.

Die Auswertevorrichtung umfasst eine elektronische Schaltung mit einem digitalen Prozessor und wenigstens einem Speicher, in dem ein von dem Prozessor ausführbares Auswertungsprogramm vorzugsweise zum Auswerten wenigstens der von dem Berührungssensor an die Auswertevorrichtung abgebenden Informationen über den Berührungszustand der Grifffläche hinterlegbar oder gemäß dem weiteren Vorrichtungsaspekt der vorliegenden Erfindung hinterlegt ist. Der Speicher kann unterschiedliche Speicherarten umfassen. Beispielsweise kann der Speicher wenigstens einen Speicher mit wahlfreiem Zugriff (RAM) und/oder wenigstens einen Festwertspeicher (ROM) umfassen. Der Prozessor ist z. B. ein Mikrokontroller oder durch diesen gebildet. Der Speicher kann vorzugsweise ein Bestandteil des Prozessors sein.

Gemäß einer Ausgestaltung ist mittels der Auswertevorrichtung die Zulässigkeit und/oder die Unzulässigkeit eines erkannten Wechsels der Schalthebelstellung, insbesondere durch Auswertung des Berührungszustands der Grifffläche und/oder des mindestens einen anderen Parameters, erkennbar. Die Auswertung des Berührungszustands und/oder des mindestens einen anderen Parameters ist vorzugsweise mittels des Auswertungsprogramms durchführbar. Ein oder der erkannte Wechsel der Schalthebelstellung ist insbesondere unzulässig, wenn keine menschliche Berührung der Grifffläche vorliegt. Voraussetzung für die Zulässigkeit eines oder des erkannten Wechsels der Schalthebelstellung ist somit insbesondere die oder eine menschliche Berührung der Grifffläche. In einem einfachen Fall ist ein oder der erkannte Wechsel der Schalthebelstellung zulässig, wenn die oder eine menschliche Berührung der Grifffläche vorliegt. Bevorzugt ist ein oder der erkannte Wechsel der Schalthebelstellung aber nur dann zulässig, wenn die oder eine menschliche Berührung der Grifffläche eine oder mehrere Voraussetzungen erfüllt.

Die Informationen über den Berührungszustand umfassen insbesondere Informationen über eine oder mehrere Eigenschaften der Berührung (Berührungseigenschaften). Bevorzugt sind die eine oder mehreren Berührungseigenschaften mittels der Auswertevorrichtung auswertbar. Vorteilhaft ist mittels der Auswertevorrichtung in Abhängigkeit von der Auswertung der einen oder mehreren Berührungseigenschaften und/oder des mindestens einen anderen Parameters ein oder das Steuersignal für das Getriebe erzeugbar. Bevorzugt sind mittels der Auswertevorrichtung die eine oder mehreren Berührungseigenschaften mit einer oder mehreren vorgegebenen Referenzeigenschaften vergleichbar, die vorteilhaft in dem Speicher der Auswertevorrichtung hinterlegt sind. Vorzugsweise umfasst die Auswertung der einen oder mehreren Berührungseigenschaften diesen Vergleich. Insbesondere ist mittels der Auswertevorrichtung in Abhängigkeit von diesem Vergleich und/oder von dem mindestens einen anderen Parameter ein oder das Steuersignal für das Getriebe erzeugbar. Die eine oder mehreren Berührungseigenschaften charakterisieren vorzugsweise die Wechselwirkung zwischen dem die Grifffläche berührenden Körperteil eines Menschen und dem Berührungssensor. Das berührende Körperteil ist bevorzugt eine Hand, insbesondere eine Handfläche der Hand.

Eine der Berührungseigenschaften umfasst vorzugsweise wenigstens eine elektrische Größe, welche zumindest eine elektrische Eigenschaft des menschlichen Gewebes charakterisiert, mit welchem die Grifffläche berührt wird. Bevorzugt ist mittels der Auswertevorrichtung die elektrische Größe auswertbar. Vorteilhaft ist mittels der Auswertevorrichtung in Abhängigkeit von der Auswertung der elektrischen Größe und/oder des mindestens einen anderen Parameters ein oder das Steuersignal für das Getriebe erzeugbar. Bevorzugt ist mittels der Auswertevorrichtung die elektrische Größe mit wenigstens einer vorgegebenen Referenzgröße vergleichbar, die insbesondere die oder wenigstens eine der vorgegebenen Referenzeigenschaften bildet. Vorzugsweise umfasst die Auswertung der elektrischen Größe diesen Vergleich. Insbesondere ist mittels der Auswertevorrichtung in Abhängigkeit von diesem Vergleich und/oder von dem mindestens einen anderen Parameter ein oder das Steuersignal für das Getriebe erzeugbar. Die elektrische Größe umfasst oder bildet z. B. einen ohmschen Widerstand und/oder einen Wechselstromwiderstand und/oder eine Kapazität und/oder einen komplexen Widerstand. Insbesondere umfassen die Informationen über den Berührungszustand Informationen über die elektrische Größe, vorzugsweise über den ohmschen Widerstand und/oder den Wechselstromwiderstand und/oder die Kapazität und/oder den komplexen Widerstand.

Die elektrische Größe kann die elektrische Eigenschaft des menschlichen Gewebes direkt oder indirekt charakterisieren. Bei einer direkten Charakterisierung entspricht die elektrische Größe z. B. der elektrischen Eigenschaft des menschlichen Gewebes. Bei einer indirekten Charakterisierung entspricht die elektrische Größe z. B. wenigstens einer elektrischen Eigenschaft des Berührungssensors, die durch die elektrische Eigenschaft des menschlichen Gewebes beeinflussbar ist, mit welchem die Grifffläche berührt wird.

Mittels der Auswertevorrichtung ist durch die Auswertung der elektrischen Größe beispielsweise eine Personenidentifikation durchführbar. Somit können unbefugte Personen, wie z. B. Kinder, von einer Betätigung des Getriebes ausgeschlossen werden. Bevorzugt ist mittels der Auswertevorrichtung durch die Auswertung der elektrischen Größe erkennbar, ob die Grifffläche mit der Handfläche einer menschlichen Hand oder mit einem anderen Gegenstand und/oder mit einem anderen Bereich des menschlichen Körpers berührt wird. Somit kann z. B. vermieden werden, dass gegen den Schalthebel stoßende Gegenstände und/oder versehentliche Berührungen des Schalthebels zu einer Betätigung des Getriebes führen. Die Referenzgröße kann z. B. zu Beginn einer Benutzung der Schalthebelvorrichtung, beispielsweise zu Beginn einer Fahrt, mittels des Berührungssensors erfasst und gespeichert werden, insbesondere in dem Speicher der Auswertevorrichtung.

Gemäß einer Ausgestaltung sind ein am Schalthebel angeordnetes Schaltmittel und ein mit der Auswertevorrichtung gekoppelter Schaltmittelsensor vorgesehen, mittels welchem eine Betätigung des Schaltmittels erfassbar ist. Das Schaltmittel ist insbesondere im Bereich oder in der Nähe der Grifffläche vorgesehen. Ein solches Schaltmittel wird z. B. dazu eingesetzt, aus einer oder wenigstens einer der Schalthebelstellungen heraus einen Wechsel der Schalthebelstellung zuzulassen. Die Referenzgröße ist bevorzugt durch eine Betätigung des Schaltmittels für eine vorgegebene Zeitdauer oder Mindestzeitdauer mittels des Berührungssensors erfassbar. Vorzugsweise ist die, ist jede der oder sind mehrere der einen oder mehreren Referenzeigenschaften durch eine Betätigung des Schaltmittels für die vorgegebene Zeitdauer oder Mindestzeitdauer mittels des Berührungssensors erfassbar. Die vorgegebene Zeitdauer oder Mindestzeitdauer beträgt beispielsweise zwei, drei, vier, fünf oder mehr Sekunden. Besonders bevorzugt wird eine Zeitdauer von fünf Sekunden. Dadurch kann zum einen eine ausreichend lange Zeitdauer zum Ermitteln einer zuverlässigen Referenzgröße bereitgestellt werden. Zum anderen ist die Zeitdauer kurz genug, eine Wartezeit der Person zum Festlegen der Referenzgröße und damit ein Zeitempfinden der Person nicht überzustrapazieren. Das Schaltmittel ist z. B. als Schalter oder Taster ausgebildet und wird auch als Sperrtaste bezeichnet. Der Schaltmittelsensor kann somit auch als Sperrtastensensor bezeichnet werden.

Gemäß einer Weiterbildung ist die Grifffläche in unterschiedliche Kontaktbereiche unterteilt, wobei mittels des Berührungssensors eine menschliche Berührung von jedem der Kontaktbereiche, insbesondere separat, erfassbar ist. Vorzugsweise umfassen die Informationen über den Berührungszustand für jeden der Kontaktbereiche wenigstens eine Information darüber, ob ein berührter Zustand oder ein berührungsfreier Zustand des jeweiligen Kontaktbereichs vorliegt. In Abhängigkeit vom Berührungszustand der Kontaktbereiche ergibt sich insbesondere ein Berührungsmuster, welches bevorzugt eine der Berührungseigenschaften bildet. Vorteilhaft umfassen die Informationen über den Berührungszustand Informationen über das Berührungsmuster. Bevorzugt ist mittels der Auswertevorrichtung das Berührungsmuster auswertbar. Insbesondere umfasst die Auswertung des Berührungszustands die Auswertung des Berührungsmusters. Vorteilhaft ist mittels der Auswertevorrichtung in Abhängigkeit von der Auswertung des Berührungsmusters und/oder des mindestens einen anderen Parameters ein oder das Steuersignal für das Getriebe erzeugbar. Bevorzugt ist mittels der Auswertevorrichtung das Berührungsmuster mit wenigstens einem vorgegebenen Referenzmuster vergleichbar, welches insbesondere die oder wenigstens eine der vorgegebenen Referenzeigenschaften bildet. Vorzugsweise umfasst die Auswertung des Berührungsmusters diesen Vergleich. Insbesondere ist mittels der Auswertevorrichtung in Abhängigkeit von diesem Vergleich und/oder von dem mindestens einen anderen Parameter ein oder das Steuersignal für das Getriebe erzeugbar.

Bevorzugt ist mittels des Berührungssensors von jedem der Kontaktbereiche wenigstens eine elektrische Größe erfassbar, welche zumindest eine elektrische Eigenschaft des menschlichen Gewebes charakterisiert, mit welchem der jeweilige Kontaktbereich berührt wird. Insbesondere umfasst das Berührungsmuster eine Verteilung der elektrischen Größen über die Grifffläche. Vorteilhaft umfassen oder bilden die elektrischen Größen jeweils einen ohmschen Widerstand und/oder einen Wechselstromwiderstand und/oder eine Kapazität und/oder einen komplexen Widerstand. Insbesondere umfassen die Informationen über den Berührungszustand Informationen über die elektrischen Größen, vorzugsweise über den ohmschen Widerstand und/oder den Wechselstromwiderstand und/oder die Kapazität und/oder den komplexen Widerstand jedes Kontaktbereichs. Ferner ist mittels des Berührungssensors von jedem der Kontaktbereiche bevorzugt wenigstens eine Kraft erfassbar, die auf den jeweiligen Kontaktbereich, insbesondere aufgrund der menschlichen Berührung, wirkt. Vorzugsweise umfasst das Berührungsmuster eine Verteilung der Kräfte über die Grifffläche. Insbesondere umfassen die Informationen über den Berührungszustand Informationen über die Kräfte, vorzugsweise über die auf jeden der Kontaktbereiche wirkendende Kraft.

Durch die Auswertung des Berührungszustands und/oder des Berührungsmusters ist es möglich, die Art der Berührung der Grifffläche genauer einzuordnen. Bevorzugt ist, insbesondere durch die Auswertung des Berührungszustands und/oder des Berührungsmusters, mittels der Auswertevorrichtung eine Berührung der Grifffläche mit der rechten Hand von einer Berührung der Grifffläche mit der linken Hand unterscheidbar. Vorteilhaft ist, insbesondere durch die Auswertung des Berührungszustands und/oder des Berührungsmusters, mittels der Auswertevorrichtung eine Berührung der Grifffläche an einer Griffflächenseite von einer Berührung der Grifffläche an einer anderen Griffflächenseite unterscheidbar. Vorzugsweise ist, insbesondere durch die Auswertung des Berührungszustands und/oder des Berührungsmusters, mittels der Auswertevorrichtung die Richtung einer durch die Hand bewirkten Bewegung des Schalthebels relativ zu der Halterung bestimmbar.

Bevorzugt ist, insbesondere durch die Auswertung des Berührungszustands und/oder des Berührungsmusters, mittels der Auswertevorrichtung ermittelbar, ob die Grifffläche mit einer Handfläche einer menschlichen Hand berührt wird. Vorteilhaft ist, insbesondere durch die Auswertung des Berührungszustands und/oder des Berührungsmusters, mittels der Auswertevorrichtung die Größe einer oder der Handfläche bestimmbar, mit welcher die Grifffläche berührt wird. Vorzugsweise ist, insbesondere durch die Auswertung des Berührungszustands und/oder des Berührungsmusters, mittels der Auswertevorrichtung wenigstens eine Kraft bestimmbar, welche von einer oder der Handfläche auf die Grifffläche ausgeübt wird.

Der Berührungssensor bildet insbesondere einen berührungsempfindlichen und/oder kraftempfindlichen Sensor. Bevorzugt umfasst der Berührungssensor ein oder mehrere Sensorelemente, mittels welchen jeweils eine menschliche Berührung erfassbar ist. Vorzugsweise ist jedem der Kontaktbereiche wenigstens eines der Sensorelemente zugeordnet. Bevorzugt ist die Anordnung der Kontaktbereiche durch die Anordnung der Sensorelemente definiert. Insbesondere ist im oder im Bereich jedes Kontaktbereichs wenigstens eines der Sensorelemente oder das zugeordnete Sensorelement angeordnet. Jedes der Sensorelemente bildet insbesondere ein berührungsempfindliches und/oder kraftempfindliches Sensorelement.

Kapazitive Sensoren sind z. B. als Regensensoren aus den Dokumenten DE102006032372A1 und DE112006002385T5. Derartige Sensoren können in modifizierter Form als Berührungssensor geeignet sein. Ferner sind berührungsempfindliche Sensoren beispielsweise aus den Druckschriften US7800592B2, EP1116166B1 und DE20016023U1 bekannt.

Bevorzugt umfasst der Berührungssensor und/oder jedes der Sensorelemente wenigstens zwei voneinander elektrisch isolierte elektrische Leiter, wobei mittels der Auswertevorrichtung wenigstens eine elektrische Eigenschaft zwischen den elektrischen Leitern erfassbar ist. Diese elektrische Eigenschaft bildet insbesondere die elektrische Größe. Vorteilhaft ist diese elektrische Eigenschaft abhängig vom Berührungszustand. Bevorzugt umfasst oder bildet diese elektrische Eigenschaft den ohmschen Widerstand und/oder den Wechselstromwiderstand und/oder die Kapazität und/oder den komplexen Widerstand zwischen den Leitern. Die Auswertevorrichtung umfasst vorzugsweise eine Wechselspannungsquelle, mittels welcher eine elektrische Wechselspannung erzeugbar und insbesondere an die elektrischen Leiter anlegbar ist. Die Frequenz der Wechselspannung kann konstant oder variierbar sein. Ferner kann die Wechselspannungsquelle durch den Prozessor gebildet sein. Die elektrischen Leitern sind vorzugsweise in oder unter der Grifffläche angeordnet. Insbesondere sind die elektrischen Leiter in die Matrix eines Verbundwertstoffes integrierbar, sodass die Festigkeit des Schalthebels erhöht werden kann.

Im Falle von mehreren Sensorelementen, ist bevorzugt wenigstens einer der Leiter jedes Sensorelements ausschließlich dem jeweiligen Sensorelement zugeordnet. Ein anderer der Leiter jedes Sensorelements kann ein gemeinsamer Leiter für mehrere oder jedes der Sensorelemente sein. Alternativ sind die Leiter jedes Sensorelements ausschließlich dem jeweiligen Sensorelement zugeordnet.

Die Auswertevorrichtung kann, insbesondere durch die Erfassung und/oder Auswertung einer Änderung der elektrischen Eigenschaft zwischen den Leitern, zwischen einem berührten Zustand der Grifffläche und einem berührungsfreien Zustand der Grifffläche unterscheiden. Vorzugsweise kann die Auswertevorrichtung, insbesondere durch die Erfassung und/oder Auswertung von Änderungen der elektrischen Eigenschaften zwischen den Leitern, bei jedem der Kontaktbereiche zwischen einem berührten Zustand und einem berührungsfreien Zustand unterscheiden. Bevorzugt ändert sich die elektrische Eigenschaft zwischen den Leitern, wenn sich der Berührungszustand von einem berührten Zustand zu einem berührungsfreien Zustand ändert und/oder wenn sich der Berührungszustand von einem berührungsfreien Zustand zu einem berührten Zustand ändert. Dies liegt daran, dass das menschliche Gewebe und/oder die Handfläche elektrische Eigenschaften aufweist, welche den ohmschen Widerstand und/oder die Kapazität und/oder den Wechselstromwiderstand und/oder den komplexen Widerstand zwischen den elektrischen Leitern ändert. Die elektrischen Eigenschaften des menschlichen Gewebes und/oder der Handfläche sind insbesondere von Bestandteilen wie Körperfett, Eiweiß und Wasser abhängig. Vorteilhaft ist es mittels der Auswertevorrichtung möglich, diese unterschiedlichen Bestandteile zu bestimmen. Somit ist z. B. eine Personenidentifikation möglich.

Gemäß einer Weiterbildung umfasst die Sensorvorrichtung mehrere Positionssensoren, mittels welchen die aktuelle Schalthebelstellung des Schalthebels erfassbar ist. Somit ist es möglich, das Getriebe entsprechend der aktuellen Schalthebelstellung anzusteuern, was insbesondere mittels der Auswertevorrichtung erfolgt. Vorteilhaft sind mittels der Sensorvorrichtung auch Zwischenstellungen des Schalthebels zwischen den Schalthebelstellungen erfassbar. Bevorzugt ist das Getriebe mittels der Auswertevorrichtung zum Ausführen eines Wechsels des Schaltzustands ansteuerbar.

Die Schalthebelvorrichtung weist insbesondere folgende Vorteile auf: Bei einer Betätigung des Schalthebels kann die Auswertung durch die Auswertevorrichtung nicht umgangen werden. Somit kann eine höhere Sicherheit und zuverlässigere Betätigung der Schalthebelvorrichtung erzielt werden. Risiken von Fehlbetätigungen können reduziert werden, da die Schalthebelvorrichtung durch den Berührungssensor eine zusätzliche Möglichkeit zur Plausibilisierung erhält, ob eine Bedienperson einen Wechsel der Schalthebelstellung beabsichtigt oder unbeabsichtigt herbeigeführt hat. Der Schaltungsaufwand für die Auswertevorrichtung kann relativ gering gehalten werden, wenn die Auswertung durch das in dem Prozessor ablaufende Auswertungsprogramm erfolgt. Ferner lässt sich das Getriebe besser Vorsteuern, insbesondere wenn mittels der Auswertevorrichtung eine Bewegungsrichtung des Schalthebels bestimmbar ist. Auch kann die Auswertevorrichtung mit anderen Fahrerassistenzsystemen verbunden sein und diesen den Berührungszustand mitteilen. Hierdurch können beispielsweise übergeordnete Sicherheitsstrategien auf Fahrzeugebene unterstützen werden.

Nachfolgend werden mehrere Beispiele für den Einsatz und die Ausgestaltung der Schalthebelvorrichtung erläutert:
Erstes Beispiel: An dem Schalthebel ist die für die Betätigung vorgesehene Grifffläche konstruktiv festgelegt, wobei unter deren Oberfläche die wenigstens zwei voneinander isolierten Leiter, beispielsweise in Drahtform, angeordnet sind, welche die Funktion eines Kondensators übernehmen. Die Kapazität und/oder der Wechselstromwiderstand des Kondensators wird mittels der Auswertevorrichtung kontinuierlich überwacht. Beim Start des Fahrzeugs (Zündung an), in welches die Schalthebelvorrichtung eingebaut ist, muss der Fahrer zum Verlassen der Parkstellung die Sperrtaste betätigen. In diesem Augenblick berührt die Hand des Fahrers die Grifffläche und beeinflusst die Kapazität und/oder den Wechselstromwiderstand des Kondensators. Die Kapazität und/oder der Wechselstromwiderstand wird mittels der Auswertevorrichtung im Moment der Berührung erfasst und als Referenzeigenschaft (Kalibriergröße) für die Empfindlichkeit des Berührungssensors gespeichert. Dadurch kann sichergestellt werden, dass Handschuhe tragende Fahrer oder Fahrer mit unterschiedlichen Handgrößen nicht von der autorisierten Betätigung des Schalthebels ausgeschlossen werden (Unterschiede in der Handgröße bzw. in der Spannweite der Hand bestehen beispielsweise bei Fahrern unterschiedlichen Geschlechts). Wird der Schalthebel nun durch einen Gegenstand oder durch eine Kinderhand bewegt, so kann die Auswertevorrichtung diese Bewegung als unautorisierte Schalthebelbetätigung erkennen und eine dieser Betätigung zugeordnete Ansteuerung des Getriebes unterlassen. Entsprechendes gilt für eine flüchtige Berührung, die z. B. durch versehentliches Anstoßen an den Schalthebel auftreten kann. In all diesen Fällen weicht die erfasste Kapazität und/oder der erfasste Wechselstromwiderstand derart stark von der Kalibriergröße ab, dass eine autorisierte Betätigung von der Auswertevorrichtung ausgeschlossen werden kann.

Eine Rekalibrierung ohne Neustart des Fahrzeugs ist beispielsweise dadurch möglich, dass die Sperrtaste mindestens zwei, drei, vier, fünf oder mehr Sekunden lang betätigt wird. Besonders bevorzugt wird eine Zeitdauer von fünf Sekunden. Dadurch kann zum einen eine ausreichend lange Zeitdauer zum Rekalibrieren bereitgestellt werden. Zum anderen ist die Zeitdauer kurz genug, eine Wartezeit der Person zum Rekalibrieren und damit ein Zeitempfinden der Person nicht überzustrapazieren. Ferner ist es möglich, die Kapazität und/oder den Wechselstromwiderstand bei unterschiedlichen Frequenzen zu messen, sodass die unterschiedlichen Bestandteile der Hand genauer bestimmbar und zur besseren Identifikation des Fahrers einsetzbar sind. Auch ist es möglich, mittels der Auswertevorrichtung die Reaktionsgeschwindigkeit des Getriebes zu steuern. Umklammert der Fahrer den Schalthebel besonders fest oder angespannt, was zu einer hohen Kapazität des Kondensators über eine längere Zeit führt, geht die Auswertevorrichtung z. B. davon aus, dass der Fahrer eine rasche Betätigung des Getriebes wünscht. Die Reaktionsgeschwindigkeit des Getriebes kann nun heraufgesetzt werden. Berührt der Fahrer hingegen den Schalthebel entspannt, beispielsweise mit lediglich zwei Fingern, geht die Auswertevorrichtung z. B. davon aus, dass der Fahrer ein entspanntes Fahren wünscht. In diesem Fall kann die Reaktionsgeschwindigkeit des Getriebes herabgesetzt werden. Die Steuerung der Reaktionsgeschwindigkeit des Getriebes kann beispielsweise in einer Tipp-Schaltgasse der Schalthebelvorrichtung erfolgen.

Zweites Beispiel: Verfügt die Schalthebelvorrichtung über eine Tipp-Schaltgasse zur manuellen Änderung des Schaltzustands des Getriebes, ergeben sich Möglichkeiten zur Optimierung des Schaltvorgangs. Bei dem Getriebe handelt es sich beispielsweise um ein Direktschaltgetriebe oder um ein automatisiertes Schaltgetriebe. Bei diesen Getriebetypen kann im leistungslosen Zweig bereits ein Gang vorgewählt werden, bevor der Fahrer manuell schaltet. Dabei muss das Getriebesteuergerät eine Vorhersage treffen, ob der Fahrer heraufschalten oder herunterschalten möchte. Trifft die Vorhersage nicht zu, verlängert sich die Schaltzeit, da zunächst im leistungslosen Zweig der Gang gewechselt werden muss. Falls die Auswertvorrichtung nicht nur die Berührung der Grifffläche mit der Hand, sondern auch die Richtung erkennen kann, in welche der Fahrer den Schalthebel drückt oder drücken wird, ist eine Möglichkeit zur Getriebevorsteuerung geschaffen, beispielsweise um einen Überholvorgang vorzubereiten. Im leistungslosen Zweig des Getriebes kann nun bei mittlerer Motordrehzahl der nächst kleinere Gang vorgewählt werden.

An dem Schalthebel ist die für die Betätigung vorgesehene Grifffläche konstruktiv festgelegt, wobei unter deren Oberfläche die wenigstens zwei voneinander isolierten Leiter, beispielsweise in Drahtform, angeordnet sind, welche die Funktion eines Kondensators übernehmen. Die Kapazität und/oder der Wechselstromwiderstand des Kondensators wird kontinuierlich mittels der Auswertevorrichtung überwacht. Die Anordnung der Leiter ist so gewählt, dass eine Erkennung der Betätigungsrichtung des Schalthebels möglich ist. Somit kann dem Getriebe der Fahrerwunsch mitgeteilt werden, welches darauf hin ein Heraufschalten oder ein Herunterschalten vorbereiten kann. Diese Vorsteuerung kann auch mit am Lenkrad vorgesehenen Schaltwippen realisiert werden. Alternativ können auch Schaltwippen mit zwei Schaltstufen eingesetzt werden.

Drittes Beispiel: Bei diesem Beispiel wird auf übergeordnete Sicherheitsstrategien eingegangen, die mittels der Schalthebelvorrichtung unterstützbar sind. Insbesondere können Informationen über den Berührungszustand an andere Systeme gemeldet werden.
a) Eine erste der Sicherheitsstrategien betrifft die Vorsteuerung eines Antiblockiersystems in Abhängigkeit vom Berührungszustand (Giermomentabschwächung). Wenn der Fahrer die Grifffläche mit einer Hand berührt, kann er bei einer Panikbremsung unter µ-Splitt-Bedingungen (Schneereste, Laub oder Rollsplitt am Fahrbahnrand bei trockener Straßenmitte) möglicherweise einen durch die Bremsung hervorgerufenen Drehmomentaufbau im Lenkrad nicht kompensieren, sofern keine Aktivlenkung verbaut ist. Da mittels der Auswertevorrichtung erkannt wird, dass eine Hand des Fahrers die Grifffläche berührt und der Fahrer folglich das Lenkrad nicht mit beiden Händen festhält, ist es möglich, die Giermomentabschwächung des Antiblockiersystems entsprechend langsamer abzubauen, sodass der Fahrer nicht überfordert wird.
b) Eine zweite der Sicherheitsstrategien betrifft eine versehentliche Schalthebelbetätigung, beispielsweise durch einen Gegenstand oder durch spielende Kinder. Wird der Schalthebel durch eine flüchtige Berührung, durch einen Gegenstand oder durch eine Kinderhand bewegt, ist dies mittels der Auswertevorrichtung als unautorisierte Betätigung des Schalthebels erkennbar. Im Fahrzeug kann eine mit der Auswertevorrichtung gekoppelte Anzeige vorgesehen sein, über welche in diesem Fall ein Warnsignal abgebbar ist, ohne das Getriebe entsprechend der unautorisierten Betätigung anzusteuern.
c) Eine dritte der Sicherheitsstrategien betrifft eine Schwäche oder einen Ausfall des Fahrers. Mittels der Auswertevorrichtung ist eine unplausible Gangwahl und/oder eine unplausible Greifrichtung erkennbar. Eine unplausible Gangwahl liegt z. B. vor, wenn der Schalthebel bei relativ hoher Geschwindigkeit in die Parkstellung gestellt wird. Eine unplausible Greifrichtung liegt z. B. vor, wenn bei einem Rechtslenker-Fahrzeug der Schalthebel mit der rechten Hand ergriffen wird. Aus derartigen Unplausibilitäten können Rückschlüsse auf ein Problem (z. B. Schwäche, Ausfall) des Fahrers gezogen werden. Ferner können derartige Unplausibilitäten mit Information aus anderen Systemen verknüpft werden. Beispielsweise könnte eines dieser anderen Systeme erkennen, dass trotz Vollgas die Handbremse betätigt wird. Ferner könnte ein Spurhalteassistent, der z. B. eines dieser anderen Systeme bildet, eine Unaufmerksamkeit des Fahrers erkennen.
   Durch die Auswertung einer oder mehrerer solcher Unplausibilitäten, ggf. zusammen mit den Informationen aus einem oder mehreren der anderen Systeme, können durch ein übergeordnetes System weitere Maßnahmen ergriffen werden. Durch eine Situationsbewertung wird z. B. mittels des übergeordneten Systems erkannt, dass der Fahrer einen Infarkt erlitten hat und der Beifahrer versucht, das Fahrzeug unter Kontrolle zu bringen. Auf Basis dieser Situationsbewertung können mittels des übergeordneten Systems beispielsweise Maßnahmen zum schnelleren und sicheren Anhalten des Kraftfahrzeuges eingeleitet werden.
d) Eine vierte der Sicherheitsstrategien betrifft die Benutzung des Fahrzeugs durch einen unbefugten Benutzer. Dazu wird das Kapazitätsprofil des berechtigten Fahrers gespeichert und z. B. mit dem Zündschlüssel verknüpft. Weicht das Kapazitätsprofil des aktuellen Benutzers von dem Kapazitätsprofil des berechtigten Fahrers in unzulässiger Weise ab, wird die Benutzung des Fahrzeugs durch einen unbefugten Benutzer erkannt, sodass die Bedienbarkeit des Fahrzeugs einschränkbar ist. Beispielsweise kann die Höchstgeschwindigkeit des Fahrzeugs beschränkt werden (z. B. auf 100 km/h). Ferner kann die Beschleunigung des Fahrzeugs beschränkt werden (z. B. auf 2 m/s^2). Zusätzlich oder ergänzend kann eine Fahrzeugortung eingeschaltet und/oder eine Diebstahlwarnanlage aktiviert werden.

Der verfahrensmäßige Aspekt der vorliegenden Erfindung wird durch ein Verfahren zur elektronischen Ansteuerung einer Fahrzeugvorrichtung, insbesondere eines Fahrzeuggetriebes, mittels einer Auswertevorrichtung gelöst, wobei die Auswertevorrichtung elektronisch mit einem Berührungssensor einer Bedienvorrichtung gekoppelt ist, wobei der Berührungssensor in einem Bereich einer Betätigungsfläche der Bedienvorrichtung angeordnet und geeignet ist, eine insbesondere menschliche Berührung der Betätigungsfläche zu erfassen und Informationen über den Berührungszustand der Betätigungsfläche an die Auswertevorrichtung abzugeben. Bei der Auswertevorrichtung kann es sich vorzugsweise um eine Auswertevorrichtung für eine vorbeschriebene Schalthebelvorrichtung für ein Fahrzeuggetriebe handeln, wobei die Bedienvorrichtung zu der Schalthebelvorrichtung und die Betätigungsfläche zu der beschriebenen Grifffläche korrespondieren. Vorzugsweise kann die Auswertevorrichtung eine ähnliche oder identische Konfiguration und Funktionsweise der im Zusammenhang mit der Schalthebelvorrichtung beschriebenen Auswertevorrichtung aufweisen, wobei die beschriebenen Funktionsweisen der Auswertevorrichtung bevorzugte weitere einzelne und/oder zusammenhängende Verfahrensschritte für das beanspruchte Verfahren zur elektronischen Ansteuerung einer Fahrzeugvorrichtung abbilden können.

Das Verfahren gemäß der vorliegenden Erfindung umfasst einen Schritt des Festlegens und Speicherns eines Referenzwertes für die Empfindlichkeit des Berührungssensors auf Basis der Informationen über den Berührungszustand bei einer Berührung der Betätigungsfläche sowie einen nachfolgenden Schritt des Festlegens eines Empfindlichkeitswertes auf Basis der Informationen über den Berührungszustand bei einer weiteren Berührung der Betätigungsfläche. Die Auswertevorrichtung legt damit auf Basis der von dem Berührungssensor übermittelten Informationen den Referenzwert bzw. den Empfindlichkeitswert fest. Dabei kann es sich vorzugsweise um einen von dem Berührungssensor konkret gemessenen Wert handeln, welcher von der Auswertevorrichtung als Referenzwert bzw. Empfindlichkeitswert definiert wird. Alternativ kann die Auswertevorrichtung aus den von dem Berührungssensor übertragenen Informationen den Referenzwert bzw. Empfindlichkeitswert ermitteln und festlegen. Dies kann beispielsweise durch eine vorzugsweise der Auswertevorrichtung zugeordneten Messvorrichtung zum Messen eines komplexen Widerstandes erfolgen. Der Referenzwert kann vorzugsweise wenigstens für einen gewissen Zeitraum zwischengespeichert oder dauerhaft gespeichert werden. Eine Zwischenspeicherung kann beispielsweise für einen Zeitraum der Verwendung der Schalthebelvorrichtung erfolgen, wobei der Zeitraum der Verwendung beispielsweise durch Einschalten der Zündung, weiter bevorzugt durch einen Start des Motors und ein Ausschalten der Zündung, weiter bevorzugt durch ein Ausschalten des Motors bestimmt sein kann. Der Empfindlichkeitswert bzw. die im Verlauf der Verwendung festgelegten Empfindlichkeitswerte können vorzugsweise gleichfalls dauerhaft gespeichert werden. Die Werte können weiter bevorzugt abrufbar gespeichert werden, um im Zuge einer Analyse wie einer Funktionsanalyse abgerufen und ausgewertet werden zu können. Der Referenzwert und der Empfindlichkeitswert können beispielsweise jeweils auf einer elektrischen Größe basieren, wobei die elektrische Größe weiter bevorzugt eine wie vorbeschriebene elektrische Größe sein kann, welche von einer dem Berührungssensor zugeordneten oder alternativ der Auswertevorrichtung zugeordneten Messvorrichtung erfassbar und von der Auswertevorrichtung verarbeitbar sind.

Das Verfahren weist des Weiteren einen dem Schritt des Festlegens nachfolgenden Schritt des Auswertens eines Vergleichs zwischen dem Referenzwert und dem gemessenen Empfindlichkeitswert zum Festlegen einer Notwendigkeit der Übermittlung eines elektronischen Ansteuersignals auf. Die Verfahrensschritte folgen nicht zwangsläufig unmittelbar aufeinander. Es können vorzugsweise weitere oder andere Verfahrensschritte zwischen den einzelnen Verfahrensschritten liegen. Zur Lösung der zugrundeliegenden Aufgabe kommt es auf die Reihenfolge der Verfahrensschritte an, um den Vergleich der festgelegten Werte und eine darauf basierende Auswertung durchführen zu können.

Gemäß einer Ausgestaltung des beanspruchten Verfahrens können sich die Schritte des Festlegens eines Empfindlichkeitswertes und des Auswertens des Vergleichs zyklisch beliebig oft wiederholen. Beispielsweise kann zu Beginn einer Nutzung des Kraftfahrzeuges durch eine erstmalige Berührung der Betätigungsfläche der Referenzwert in einer wie vorbeschriebenen Art und Weise erfasst bzw. festgelegt und abgespeichert werden. Während einer Nutzung des Kraftfahrzeuges kann durch weitere Berührungen der Betätigungsfläche jeweils der Empfindlichkeitswert erfasst bzw. festgelegt und mittels der Vergleichsauswertung zu einer Festlegung durch die Auswertevorrichtung führen, ob ein Ansteuersignal und bei einer Übertragung des Ansteuersignals, welche Informationen mit dem Ansteuersignal zu übertragen sind. Mit anderen Worten kann die Vergleichsauswertung zu einer Maßnahme durch die Auswertevorrichtung führen. Die Maßnahme kann beispielsweise eine vorbeschriebene Plausibilitätsprüfung mit Blick auf eine zulässige Gangwahl und/oder einer zulässigen Greifrichtung und/oder eine vorbeschriebene Personenidentifikation sein. Im Allgemeinen kann eine durch die Auswertevorrichtung vornehmbare Maßnahme in einem Unterlassen oder Tun begründet sein. Dabei kann ein Unterlassen durch ein Nichtabsenden eines Ansteuersignals definiert sein, während ein Tun durch ein Absenden eines Ansteuersignals mit ausführbaren Informationen für ein mit der Fahrzeugvorrichtung gekoppelten und dieses steuernde Steuergerät gekoppelt sein. Wie vorbeschrieben kann es sich bei der Fahrzeugvorrichtung vorzugsweise um ein Fahrzeuggetriebe und folglich bei dem Steuergerät um ein Getriebesteuergerät handeln. Dadurch kann ein Herauf- oder Herabschalten des Getriebes auf Basis des Ansteuersignals bewirkt werden. Alternativ oder zusätzlich kann das Ansteuersignal vorzugsweise ausführbare Informationen beispielsweise für das Getriebesteuergerät für eine wie vorbeschriebene Steuerung der Reaktionsgeschwindigkeit des Getriebes beinhalten. Weitere bevorzugte mögliche Maßnahmen durch die Auswertevorrichtung ergeben sich in beispielhafter Weise aus den vorbeschriebenen Funktionsweisen der Auswertevorrichtung.

Gemäß einer weiteren bevorzugten Ausgestaltung der vorliegenden Erfindung umfasst das Verfahren vorzugsweise einen Schritt des Rekalibrierens des Referenzwertes im Bedarfsfall, wobei die Rekalibrierung vor dem Schritt des Festlegens eines Empfindlichkeitswertes erfolgt. Weiter bevorzugt kann der Schritt des Rekalibrierens nach Festlegen eines Referenzwertes durch den Schritt des Festlegens des Referenzwertes an Stelle des Schritts des Festlegens des Referenzwertes treten. Alternativ oder zusätzlich dazu können der Schritt des Festlegens und der Schritt des Rekalibrierens vorzugsweise identisch sein. Für diesen Fall wird der zu rekalibrierende Referenzwert zunächst als Null angenommen, um diesen Wert nach dem Schritt des Rekalibrierens durch den rekalibrierten Referenzwert zu ersetzen. Dies könnte beispielsweise bei einer erstmaligen Benutzung der Fahrzeugvorrichtung oder bei einem Reseten bzw. Löschen der in der Auswertevorrichtung speicherbaren Informationen notwendig sein. Die Notwendigkeit der Rekalibrierung kann einem Fahrzeugführer durch eine Kopplung der Auswertevorrichtung mit einer anzeigefähigen Fahrzeugvorrichtung des Fahrzeuges angezeigt werden. Die anzeigefähige Fahrzeugvorrichtung kann hierbei eine im Sichtfeld des Fahrzeugführers üblicherweise angeordnete Fahrzeuganzeigevorrichtung sein, welches ein Displayfeld zum Anzeigen der notwendigen Vornahme der Rekalibrierung aufweist. Die Rekalibrierung kann beispielsweise durch einen Neustart des Kraftfahrzeuges, beispielsweise ein Einschalten der Zündung oder ein Start des Motors oder durch eine wie vorbeschriebene längere Betätigung einer Taste wie beispielsweise der Sperrtaste erfolgen. Eine Rekalibrierung könnte vorzugsweise erforderlich sein, wenn sich ein Vergleichswert zwischen dem Referenzwert und den festgelegten Empfindlichkeitswerten im Laufe nacheinander folgender Auswertungen derart ändert, dass der Vergleichswert im Verlauf der Auswertungen außerhalb einer vorbestimmbaren Toleranz fällt. Die vorbestimmbare Toleranz kann vorzugsweise eine in der Auswertevorrichtung oder extern, mit anderen Worten außerhalb der Auswertevorrichtung gespeicherte Information sein, welche bei der Auswertung des Vergleichswertes berücksichtigt wird.

Die Erfindung wird nachfolgend anhand bevorzugter Ausführungsformen unter Bezugnahme auf die Zeichnung beschrieben. In der Zeichnung zeigen:
- Fig. 1: eine schematische Ansicht einer Schalthebelvorrichtung gemäß einer ersten Ausführungsform,
- Fig. 2: eine schematische Darstellung des Berührungssensors und der Auswertevorrichtung nach Fig. 1,
- Fig. 3: eine schematische Darstellung einer Auswertevorrichtung und eines Berührungssensors gemäß einer zweiten Ausführungsform, und
- Fig. 4: eine schematische Darstellung eines Verfahrens gemäß einem Ausführungsbeispiel.

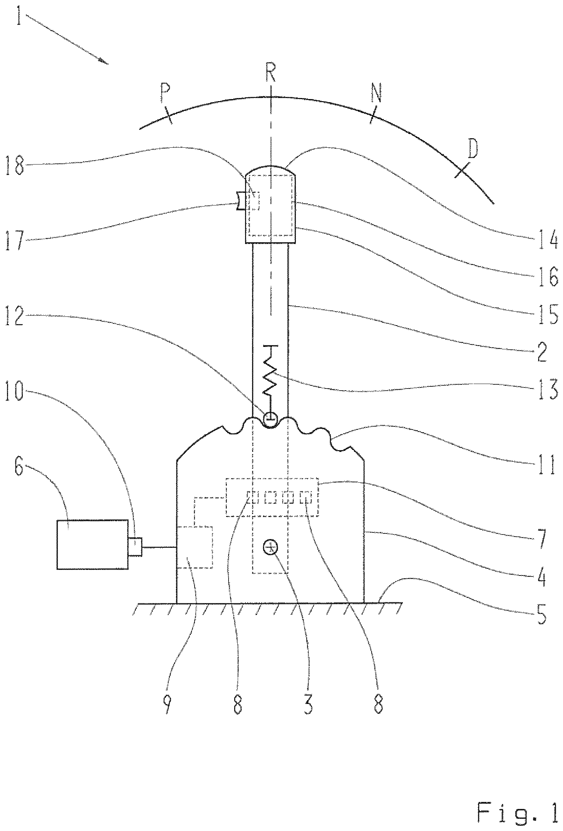

Aus Fig. 1 ist eine Schalthebelvorrichtung 1 gemäß einer ersten Ausführungsform ersichtlich, wobei ein Schalthebel 2 um eine Schaltachse 3 schwenkbar an einer Halterung 4 gelagert ist, die fest in einem Fahrzeug 5 montiert ist, welches ein Fahrzeuggetriebe 6 umfasst. Der Schalthebel 2 kann um die Schaltachse 3 in unterschiedliche Schalthebelstellungen P, R, N und D geschwenkt werden. An der Halterung 4 ist eine Sensorvorrichtung 7 mit mehreren Positionssensoren 8 vorgesehen, mittels welchen die aktuelle Schalthebelstellung des Schalthebels 2 erfassbar ist. Die Sensorvorrichtung 7 ist elektrisch mit einer Auswertevorrichtung 9 verbunden, die wiederum elektrisch mit einem Getriebesteuergerät 10 des Getriebes 6 verbunden ist. Ferner ist eine Rastiervorrichtung vorgesehen, die eine an der Halterung 4 vorgesehen Rastbahn 11 und ein am Schalthebel 2 vorgesehenes Rastierelement 12 umfasst, welches mittels einer Rastierelementfeder 13 gegen die Rastbahn 11 gespannt ist. An einem freien Ende des Schalthebels 2 ist ein Schaltknauf 14 befestigt, der gemäß der ersten Ausführungsform im Wesentlichen zylindrisch ausgebildet ist und dem Schalthebel 2 zugerechnet wird. Die Oberfläche des Schaltknaufs 14 umfasst eine Grifffläche 15, unterhalb derer ein Berührungssensor 16 in das Material des Schaltknaufs 14 eingebettet ist. Ferner ist am Schaltknauf 15 ein Sperrtaster 17 vorgesehen, dessen Betätigung mittels eines Sperrtastensensors 18 erfassbar ist. Der Berührungssensor 16 und der Sperrtastensensor 18 sind elektrisch mit der Auswertevorrichtung 9 verbunden.

Das Getriebe 6 ist ein Automatikgetriebe, sodass der Schalthebelstellung P eine Parkstellung zugeordnet ist, in der insbesondere die oder wenigstens eine der Bremsen des Fahrzeugs 5 betätigt sind. Der Schalthebelstellung R ist ein Rückwärtsgang des Getriebes 6 zugeordnet, und der Schalthebelstellung N ist ein Leerlauf des Getriebes 6 zugeordnet. Die Schalthebelstellung D ist für einen normalen Vorwärtsfahrbetrieb des Fahrzeugs vorgesehen, sodass der Schalthebelstellung D mehrere Vorwärtsgänge des Getriebes 6 zugeordnet sind. Wenigstens den Schalthebelstellungen R, N und D ist somit jeweils ein Schaltzustand des Getriebes 6 zugeordnet.

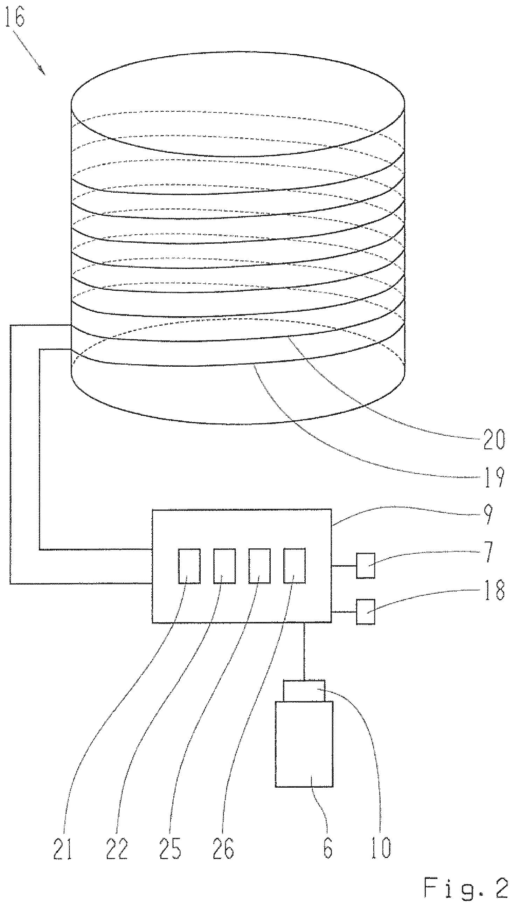

Aus Fig. 2 ist eine schematische Ansicht des Berührungssensors 16 ersichtlich, der zwei als Doppelhelix gewickelte elektrische Leiter 19 und 20 umfasst, die elektrisch voneinander isoliert und insbesondere jeweils durch einen Draht gebildet sind. Die Auswertevorrichtung 9 umfasst eine Wechselspannungsquelle 21, mittels welcher eine Wechselspannung an die elektrischen Leiter 19 und 20 angelegt wird, und eine Messvorrichtung 22, mittels welcher der komplexe Widerstand zwischen den elektrischen Leitern 19 und 20 gemessen wird. Ferner umfasst die Auswertevorrichtung 9 einen digitalen Prozessor 25 und einen Speicher 26, in dem ein von dem Prozessor 25 ausführbares Auswertungsprogramm zum Auswerten wenigstens der von dem Berührungssensor 16 an die Auswertevorrichtung 9 abgebenden Informationen über den Berührungszustand der Grifffläche 15 hinterlegt ist. Der Prozessor 25 kann auch durch einen Mikrokontroller gebildet sein. In diesem Fall kann der Mikrokontroller die Wechselspannungsquelle 21 und/oder die Messvorrichtung 22 umfassen.

Wird die Grifffläche 15 mit der Handfläche eines Fahrers des Fahrzeugs 5 berührt, ändert sich der mittels der Messvorrichtung 22 gemessene komplexe Widerstand. Insbesondere ändert sich der kapazitive Anteil dieses Widerstands. Die Änderung des komplexen Widerstands und/oder des kapazitiven Anteils aufgrund der Berührung ist insbesondere abhängig vom Wassergehalt des menschlichen Körpers (der Wassergehalt beträgt z. B. ca. 60%) und/oder vom Unterschied der elektrischen Permittivität im berührten Zustand von der im berührungsfreien Zustand (das Verhältnis der Permittivität von Wasser zu der von Luft beträgt z. B. ca. 77) und/oder von der Änderung der elektrischen Permittivität in Abhängigkeit von der Frequenz der angelegten Spannung (Dispersion). Die Auswertevorrichtung 9 kann somit eine menschliche Berührung der Grifffläche 15 erfassen.

Wird der Schalthebel 2 z. B. durch einen Gegenstand unbeabsichtigt von der Schalthebelstellung N in die Schalthebelstellung D überführt, so kann die Auswertevorrichtung 9 durch Auswertung des erfassten komplexen Widerstands erkennen, dass dieser Schalthebelstellungswechsel erfolgte, ohne dass die Grifffläche 15 von der Handfläche des Fahrers berührt wurde. Der Schalthebelstellungswechsel wird somit als unzulässig gewertet und eine Ansteuerung des Getriebes zum Wechsel des Schaltzustands unterlassen.

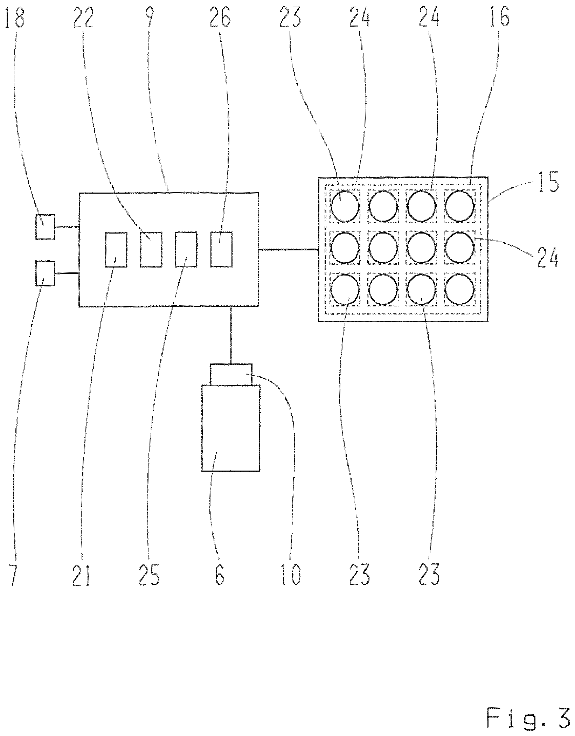

Aus Fig. 3 sind in schematischer Darstellung eine Auswertevorrichtung 9 und eine Grifffläche 15 gemäß einer zweiten Ausführungsform ersichtlich, wobei zu der ersten Ausführungsform identische oder ähnliche Merkmale mit denselben Bezugszeichen wie bei der ersten Ausführungsform bezeichnet sind. Die Grifffläche 15 ist in mehrere Kontaktbereiche 23 unterteilt, denen jeweils ein berührungsempfindliches Sensorelement 24 zugeordnet ist, mittels welchem eine menschliche Berührung des jeweiligen Kontaktbereichs erfassbar ist. Die Sensorelemente 24 sind mit der Auswertevorrichtung elektrisch verbunden und bilden zusammen einen Berührungssensor 16, mittels welchem ein flächenhaftes Berührungsmuster über die Grifffläche 15 erfassbar ist. Mittels der Auswertevorrichtung 9 wird das flächenhafte Berührungsmuster ausgewertet und dabei mit einem oder mehreren vorgegebenen Referenzmustern verglichen. Durch diese Auswertung ist z. B. erkennbar, ob eine Berührung der Grifffläche 15 mit der rechten oder mit der linken Hand vorliegt.

Zur weiteren Beschreibung der zweiten Ausführungsform wird auf die Beschreibung der ersten Ausführungsform verwiesen. Insbesondere ist der Berührungssensor gemäß der ersten Ausführungsform durch den Berührungssensor gemäß der zweiten Ausführungsform ersetzbar.

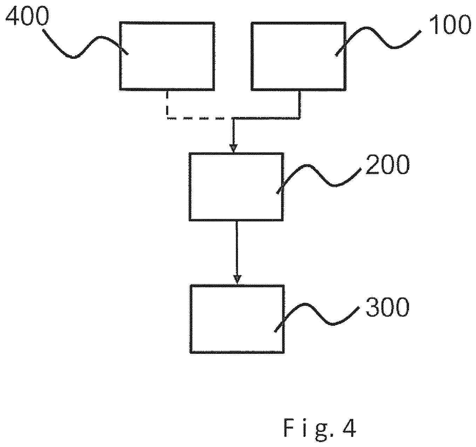

Figur 4 zeigt eine schematische Darstellung eines Verfahrens zur elektronischen Ansteuerung einer Fahrzeugvorrichtung nach einem bevorzugten Ausführungsbeispiel der vorliegenden Erfindung. Das Verfahren eignet sich beispielsweise für eine Schalthebelvorrichtung nach einem der vorbeschriebenen Ausführungsformen, wobei mittels des Verfahrens das Fahrzeuggetriebe 6 von der Auswertevorrichtung 9 angesteuert wird.

In einem ersten Verfahrensschritt 100 wird zunächst ein Referenzwert für die Empfindlichkeit des Berührungssensors 16 festgelegt und gespeichert. Die Festlegung erfolgt auf Basis der Informationen über den Berührungszustand bei einer Berührung der Grifffläche 15, wobei die Informationen einen von der Messvorrichtung 22 konkret gemessenen Wert enthalten können, der von der Auswertevorrichtung 9 als Referenzwert festgelegt wird. In einem nachfolgenden Verfahrensschritt 200 wird ein Empfindlichkeitswert von der Auswertevorrichtung 9 festgelegt. Die Festlegung kann in gleicher Weise wie für den Referenzwert erfolgen, wobei die Auswertevorrichtung 9 beispielsweise einen von der Messvorrichtung 22 bei einer mit Blick auf die Festlegung des Referenzwertes notwendigen Berührung weiteren bzw. nachfolgenden Berührung der Grifffläche 15 konkret gemessenen Wert als Empfindlichkeitswert festlegt. Anschließend erfolgt in einem weiteren Verfahrensschritt 300 das Auswerten eines Vergleichs zwischen dem Referenzwert und dem Empfindlichkeitswert. Basierend auf der Auswertung kann von der Auswertevorrichtung 9 ein Ansteuersignal an das Getriebesteuergerät 10 abgegeben werden. Dies kann zum Beispiel dann der Fall sein, wenn die Auswertung ergibt, dass es sich um eine zulässige Betätigung der Schalthebelvorrichtung 1 handelt, mittels welchem ein Getriebeschaltvorgang vorgenommen werden soll. Das Ansteuersignal enthält dann die für den Getriebeschaltvorgang notwendigen Informationen. Sofern die Betätigung der Schalthebelvorrichtung 1 als unzulässig ausgewertet wird, sendet die Auswertevorrichtung 9 kein Ansteuersignal an das Getriebesteuergerät 10 ab, wodurch eine Vornahme eines Getriebeschaltvorganges durch das Fahrzeuggetriebe 6 unterbleibt. Alternativ kann die Auswertevorrichtung 9 auch bei einer als unzulässig ausgewerteten Betätigung der Schalthebelvorrichtung 9 ein Ansteuersignal an das Getriebesteuergerät 10 absenden, wobei das Ansteuersignal solche Informationen enthält, die einen Getriebeschaltvorgang durch das Fahrzeuggetriebe 6 als unzulässig und als nicht auszuführend ausweisen. Ein solches Ansteuersignal kann beispielsweise bei einer redundanten Ansteuerung des Getriebesteuergerätes 10 zu Überprüfungszwecken abgesendet werden.

Das Verfahren umfasst ferner einen weiteren Verfahrensschritt 400, mittels welchem eine Rekalibrierung des Referenzwertes im Bedarfsfall vorgenommen werden kann. Die Notwendigkeit der Rekalibrierung kann einem Fahrzeugführer vor dem Verfahrensschritt 400 durch eine Kopplung der Auswertevorrichtung 9 mit einer anzeigefähigen Fahrzeugvorrichtung des Fahrzeuges 5 angezeigt werden. Die anzeigefähige Fahrzeugvorrichtung kann hierbei eine im Sichtfeld des Fahrzeugführers üblicherweise angeordnete Fahrzeuganzeigevorrichtung sein, welches ein Displayfeld zum Anzeigen der notwendigen Vornahme der Rekalibrierung aufweist. Die Rekalibrierung erfolgt vor dem Verfahrensschritt 200. Die Rekalibrierung kann beispielsweise nach dem Verfahrensschritt 100 an die Stelle dieses Verfahrensschrittes 100 treten. Die Rekalibrierung kann alternativ mit dem Verfahrensschritt 100 identisch sein. Für diesen Fall entfällt bei einer ersten Betätigung der Schalthebelvorrichtung 1, bei welcher ein Festlegens eines Referenzwertes für die nachfolgenden Auswertungen bzw. Vergleiche notwendig ist, der Verfahrensschritt 100, wobei ein Referenzwert von der Auswertevorrichtung 9 mit einem Nullwert festgelegt und in derselben oder extern gespeichert ist. Nach Durchführung des Verfahrensschritts 400 wird dieser Nullwert durch den rekalibrierten Referenzwert ersetzt. Dies könnte beispielsweise bei einer erstmaligen Benutzung der Schalthebelvorrichtung 1 oder bei einem Reseten bzw. Löschen der in der Auswertevorrichtung 9 oder in einem externen Speicher speicherbaren Informationen notwendig sein. Die Rekalibrierung kann beispielsweise durch einen Neustart des Kraftfahrzeuges, beispielsweise durch Einschalten der Zündung oder Start des Motors oder durch eine Betätigung einer Taste wie beispielsweise der Sperrtaste 17 über einen vorbestimmten Zeitraum von beispielsweise 5 Sekunden erfolgen. Eine Rekalibrierung kann erforderlich sein, wenn sich ein Vergleichswert zwischen dem Referenzwert und den festgelegten Empfindlichkeitswerten im Laufe nacheinander durchgeführter Auswertungen derart ändert, dass der Vergleichswert im Verlauf der Auswertungen außerhalb einer vorbestimmbaren Toleranz fällt. Die vorbestimmbare Toleranz kann eine in der Auswertevorrichtung 9 oder extern, mit anderen Worten außerhalb der Auswertevorrichtung 9 gespeicherte Information sein, welche bei der Auswertung des Vergleichswertes berücksichtigt wird. In diesem Fall gibt die Auswertevorrichtung 9 ein Signal an die Anzeigevorrichtung ab, um ein entsprechendes sichtbares Signal dem Fahrzeugführer über das Displayfeld anzeigen lassen zu können.

### Bezugszeichen

- 1: Schalthebelvorrichtung
- 2: Schalthebel
- 3: Schaltachse
- 4: Halterung
- 5: Fahrzeug
- 6: Fahrzeuggetriebe
- 7: Sensorvorrichtung
- 8: Positionssensor
- 9: Auswertevorrichtung
- 10: Getriebesteuergerät
- 11: Rastbahn
- 12: Rastierelement
- 13: Feder
- 14: Schaltknauf
- 15: Grifffläche
- 16: Berührungssensor
- 17: Sperrtaste
- 18: Sperrtastensensor
- 19: elektrischer Leiter
- 20: elektrischer Leiter
- 21: Wechselspannungsquelle
- 22: Messvorrichtung
- 23: Kontaktbereich
- 24: Sensorelement
- 25: Prozessor
- 26: Speicher
- 100: erster Verfahrensschritt
- 200: zweiter Verfahrensschritt
- 300: dritter Verfahrensschritt
- 400: weiterer Verfahrensschritt

## Patentansprüche

1. Schalthebelvorrichtung für ein Fahrzeuggetriebe mit einer Halterung (4), einem an der Halterung (4) bewegbar gelagerten und eine Grifffläche (15) umfassenden Schalthebel (2), der in vorgegebene Schalthebelstellungen (P, R, N, D) bewegbar ist, einer Sensorvorrichtung (7), mittels welcher die aktuelle Schalthebelstellung erfassbar ist, einer mit der Sensorvorrichtung (7) gekoppelten Auswertevorrichtung (9) zum Steuern des Getriebes (6), mittels welcher im Zusammenwirken mit der Sensorvorrichtung (7) ein Wechsel der Schalthebelstellung erkennbar ist, und wenigstens einen mit der Auswertevorrichtung (9) elektronisch gekoppelten und an dem Schalthebel (2) im Bereich der Grifffläche (15) angeordneten Berührungssensor (16), mittels welchem eine insbesondere menschliche Berührung der Grifffläche (15) erfassbar und Informationen über den Berührungszustand der Grifffläche (15) an die Auswertevorrichtung (9) abgebbar sind, **dadurch gekennzeichnet, dass** die Auswertevorrichtung (9) eingerichtet ist, einen Referenzwert für die Empfindlichkeit des Berührungssensors (16) auf Basis der Informationen über den Berührungszustand bei einer Berührung der Grifffläche (15) festzulegen und zu speichern, nachfolgend einen Empfindlichkeitswert auf Basis der Informationen über den Berührungszustand bei einer weiteren Berührung der Grifffläche (15) festzulegen, und einen Vergleich zwischen dem Referenzwert und dem Empfindlichkeitswert zum Festlegen einer Notwendigkeit der Übermittlung eines elektronischen Ansteuersignals auszuwerten.

2. Schalthebelvorrichtung nach Anspruch 1, **dadurch gekennzeichnet, dass** mittels der Auswertevorrichtung (9) durch Auswertung des Berührungszustands die Unzulässigkeit eines erkannten Wechsels der Schalthebelstellung erkennbar ist.

3. Schalthebelvorrichtung nach Anspruch 1 oder 2, **dadurch gekennzeichnet, dass** mittels der Auswertevorrichtung (9) durch Auswertung des Berührungszustands eine Berührung der Grifffläche (15) mit der rechten Hand von einer Berührung der Grifffläche (15) mit der linken Hand unterscheidbar ist.

4. Schalthebelvorrichtung nach einem der vorangehenden Ansprüche, **dadurch gekennzeichnet, dass** mittels der Auswertevorrichtung (9) durch Auswertung des Berührungszustands die Richtung einer durch die Hand bewirkten Bewegung des Schalthebels (2) relativ zu der Halterung (4) bestimmbar ist.

5. Schalthebelvorrichtung nach einem der vorangehenden Ansprüche, **dadurch gekennzeichnet, dass** mittels der Auswertevorrichtung (9) durch Auswertung des Berührungszustands eine Berührung der Grifffläche (15) an einer Griffflächenseite von einer Berührung der Grifffläche (15) an einer anderen Griffflächenseite unterscheidbar ist.

6. Schalthebelvorrichtung nach einem der vorangehenden Ansprüche, **dadurch gekennzeichnet, dass** die Grifffläche (15) in unterschiedliche Kontaktbereiche (23) unterteilt ist und mittels des Berührungssensors (16) eine menschliche Berührung von jedem der Kontaktbereiche (23) erfassbar ist.

7. Schalthebelvorrichtung nach Anspruch 6, **dadurch gekennzeichnet, dass** mittels der Auswertevorrichtung (9) ein sich in Abhängigkeit vom Berührungszustand der Kontaktbereiche (23) ergebendes Berührungsmuster auswertbar ist.

8. Schalthebelvorrichtung nach Anspruch 7, **dadurch gekennzeichnet, dass** mittels der Auswertevorrichtung (9) das Berührungsmuster mit wenigstens einem vorgegebenen Referenzmuster vergleichbar ist.

9. Schalthebelvorrichtung nach einem der Ansprüche 6 bis 8, **dadurch gekennzeichnet, dass** der Berührungssensor (16) mehrere Sensorelemente (24) umfasst, mittels welchen jeweils eine menschliche Berührung erfassbar ist, wobei jedem der Kontaktbereiche (23) wenigstens eines der Sensorelemente (24) zugeordnet ist.

10. Schalthebelvorrichtung nach Anspruch 9, **dadurch gekennzeichnet, dass** jedes der Sensorelemente (24) wenigstens zwei elektrisch voneinander isolierte elektrische Leiter (19, 20) umfasst und mittels der Auswertevorrichtung (9) eine Änderung wenigstens einer elektrischen Eigenschaft zwischen den Leitern (19, 20) des jeweiligen Sensorelements erfassbar ist.

11. Schalthebelvorrichtung nach einem der Ansprüche 1 bis 9, **dadurch gekennzeichnet, dass** der Berührungssensor (16) wenigstens zwei elektrisch voneinander isolierte elektrische Leiter (19, 20) umfasst und mittels der Auswertevorrichtung (9) eine Änderung wenigstens einer elektrischen Eigenschaft zwischen den Leitern (19, 20) erfassbar ist.

12. Schalthebelvorrichtung nach Anspruch 10 oder 11, **dadurch gekennzeichnet, dass** die elektrische Eigenschaft den ohmschen Widerstand, den Wechselstromwiderstand oder die Kapazität zwischen den Leitern (19, 20) umfasst.

13. Schalthebelvorrichtung nach einem der Ansprüche 10 bis 12, **dadurch gekennzeichnet, dass** die elektrischen Leiter (19, 20) an oder unter der Grifffläche (15) angeordnet sind.

14. Auswertevorrichtung (9) für eine Schalthebelvorrichtung nach einem der vorhergehenden Ansprüche, wobei die Auswertevorrichtung (9) mit dem Berührungssensor (16) elektronisch koppelbar ist und eine elektronische Schaltung mit einem Prozessor und einem Speicher mit einem von dem Prozessor ausführbaren Auswertungsprogramm zum Auswerten wenigstens der von dem Berührungssensor (16) an die Auswertevorrichtung abgebenden Informationen über den Berührungszustand der Grifffläche (15) aufweist, wobei die Auswertevorrichtung (9) eingerichtet ist, einen Referenzwert für die Empfindlichkeit des Berührungssensors (16) auf Basis der Informationen über den Berührungszustand bei einer Berührung der Grifffläche (15) festzulegen und zu speichern, nachfolgend einen Empfindlichkeitswert auf Basis der Informationen über den Berührungszustand bei einer weiteren Berührung der Grifffläche (15) festzulegen, und einen Vergleich zwischen dem Referenzwert und dem Empfindlichkeitswert zum Festlegen einer Notwendigkeit der Übermittlung eines elektronischen Ansteuersignals auszuwerten.

15. Verfahren zur elektronischen Ansteuerung einer Fahrzeugvorrichtung mittels einer Auswertevorrichtung (9), insbesondere nach Anspruch 14, wobei die Auswertevorrichtung (9) elektronisch mit einem Berührungssensor (16) einer Bedienvorrichtung gekoppelt ist, wobei der Berührungssensor (16) in einem Bereich einer Betätigungsfläche (15) der Bedienvorrichtung angeordnet und geeignet ist, eine insbesondere menschliche Berührung der Betätigungsfläche (15) zu erfassen und Informationen über
den Berührungszustand der Betätigungsfläche (15) an die Auswertevorrichtung (9) abzugeben, wobei das Verfahren in der Reihenfolge aufweist
einen Schritt (100) des Festlegens und Speicherns eines Referenzwertes für die Empfindlichkeit des Berührungssensors (16) auf Basis der Informationen über den Berührungszustand bei einer Berührung der Betätigungsfläche (15),
einen Schritt (200) des Festlegens eines Empfindlichkeitswertes auf Basis der Informationen über den Berührungszustand bei einer weiteren Berührung der Betätigungsfläche (15), und
einen Schritt (300) des Auswertens eines Vergleichs zwischen dem Referenzwert und dem Empfindlichkeitswert zum Festlegen einer Notwendigkeit der Übermittlung eines elektronischen Ansteuersignals.

## Claims

1. Gearshift lever device for a vehicle gearbox having a mount (4), a gearshift lever (2) which is movably supported on the mount (4), comprises a gripping face (15) and can be moved into predefined gearshift lever positions (P, R, N, D), a sensor device (7) by means of which the current gearshift lever position can be sensed, an evaluation device (9) which is coupled to the sensor device (7) for controlling the gearbox (6), by means of which evaluation device (9) a change of the gearshift lever position can be detected in conjunction with the sensor device (7), and at least one contact sensor (16) which is electronically coupled to the evaluation device (9) and arranged on the gearshift lever (2) in the region of the gripping face (15) and by means of which, in particular, human contact with the gripping face (15) can be sensed and information about the contact state of the gripping face (15) can be output to the evaluation device (9), **characterized in that** the evaluation device (9) is configured to define and store a reference value for the sensitivity of the contact sensor (16) on the basis of the information about the contact state when the gripping face (15) is touched, to subsequently define a sensitivity value on the basis of the information about the contact state when the gripping face (15) is touched further, and to evaluate a comparison between the reference value and the sensitivity value in order to define a need to transmit an electronic actuation signal.

2. Gearshift lever device according to Claim 1, **characterized in that** the inadmissibility of a detected change of the gearshift lever position can be detected by means of the evaluation device (9) by evaluating the contact state.

3. Gearshift lever device according to Claim 1 or 2, **characterized in that** contact of the gripping face (15) with the right hand can be differentiated from contact of the gripping face (15) with the left hand by means of the evaluation device (9) by evaluating the contact state.

4. Gearshift lever device according to one of the preceding claims, **characterized in that** the direction of a movement of the gearshift lever (2) relative to the mount (4), which is brought about manually, can be determined by means of the evaluation device (9) by evaluating the contact state.

5. Gearshift lever device according to one of the preceding claims, **characterized in that** contact with the gripping face (15) on a gripping face side can be differentiated from contact with the gripping face (15) on another gripping face side by means of the evaluation device (9) by evaluating the contact state.

6. Gearshift lever device according to one of the preceding claims, **characterized in that** the gripping face (15) is divided into different contact areas (23), and human contact with each of the contact areas (23) can be sensed by means of the contact sensor (16).

7. Gearshift lever device according to Claim 6, **characterized in that** a contact pattern which is obtained as a function of the contact state of the contact areas (23) can be evaluated by means of the evaluation device (9).

8. Gearshift lever device according to Claim 7, **characterized in that** the contact pattern can be compared with at least one predefined reference pattern by means of the evaluation device (9).

9. Gearshift lever device according to one of Claims 6 to 8, **characterized in that** the contact sensor (16) comprises a plurality of sensor elements (24) by means of which human contact can be respectively sensed, wherein each of the contact areas (23) is assigned at least one of the sensor elements (24).

10. Gearshift lever device according to Claim 9, **characterized in that** each of the sensor elements (24) comprises at least two electrical conductors (19, 20) which are electrically insulated from one another, and a change in at least one electrical property between the conductors (19, 20) of the respective sensor element can be sensed by means of the evaluation device (9).

11. Gearshift lever device according to one of Claims 1 to 9, **characterized in that** the contact sensor (16) comprises at least two electrical conductors (19, 20) which are electrically insulated from one another, and a change in at least one electrical property between the conductors (19, 20) can be sensed by means of the evaluation device (9).

12. Gearshift lever device according to Claim 10 or 11, **characterized in that** the electrical property comprises the ohmic resistance, the alternating current resistance or the capacitance between the conductors (19, 20).

13. Gearshift lever device according to one of Claims 10 to 12, **characterized in that** the electrical conductors (19, 20) are arranged on or under the gripping face (15).

14. Evaluation device (9) for a gearshift lever device according to one of the preceding claims, wherein the evaluation device (9) can be electronically coupled to the contact sensor (16) and has an electronic circuit with a processor and a memory with an evaluation program which can be executed by the processor and has the purpose of evaluating at least the information about the contact state of the gripping face (15), which is output by the contact sensor (16) to the evaluation device, wherein the evaluation device (9) is configured to define and store a reference value for the sensitivity of the contact sensor (16) on the basis of the information about the contact state when the gripping face (15) is touched, to subsequently define a sensitivity value on the basis of the information about the contact state when the gripping face (15) is touched further, and to evaluate a comparison between the reference value and the sensitivity value in order to define a need to transmit an electronic actuation signal.

15. Method for electronically actuating a vehicle device by means of an evaluation device (9), in particular according to Claim 14, wherein the evaluation device (9) is electronically coupled to a contact sensor (16) of an operator control device, wherein the contact sensor (16) is arranged in a region of an actuation face (15) of the operator control device and is suitable for sensing, in particular human, contact of the actuation face (15) and for outputting information about the contact state of the actuation face (15) to the evaluation device (9), wherein the method has, in the sequence:
a step (100) of defining and storing a reference value for the sensitivity of the contact sensor (16) on the basis of the information about the contact state when the actuation face (15) is touched,
a step (200) of defining a sensitivity value on the basis of information about the contact state when the actuation face (15) is touched further, and
a step (300) of evaluating a comparison between the reference value and the sensitivity value in order to define a need to transmit an electronic actuation signal.

## Revendications

1. Dispositif de levier de changement de vitesses destiné à une boîte de vitesses de véhicule, comportant une fixation (4), un levier de changement de vitesses (2) monté mobile sur la fixation (4) et comprenant une surface de préhension (15), lequel levier peut être déplacé à des positions de levier de changement de vitesses (P, R, N, D) prédéfinies, un dispositif à capteur (7) au moyen duquel la position actuelle du levier de changement de vitesses peut être détectée, un dispositif d'évaluation (9) couplé au dispositif à capteur (7) pour commander la boîte de vitesses (6), au moyen duquel, en coopération avec le dispositif à capteur (7), un changement de position du levier de changement de vitesses peut être identifié, et au moins un capteur de contact (16) couplé électroniquement au dispositif d'évaluation (9) et disposé sur le levier de changement de vitesses (2) dans la région de surface de préhension (15), au moyen duquel un contact de la surface de préhension (15), notamment par une personne, peut être détecté et des informations concernant l'état de contact avec la surface de préhension (15) peuvent être délivrées au dispositif d'évaluation (9), **caractérisé en ce que** le dispositif d'évaluation (9) est conçu pour déterminer et stocker une valeur de référence pour la sensibilité du capteur de contact (16) sur la base des informations concernant l'état de contact lors d'un contact avec la surface de préhension (15), pour déterminer ensuite une valeur de sensibilité sur la base des informations concernant l'état de contact lors d'un autre contact avec la surface de préhension (15), et pour évaluer une comparaison entre la valeur de référence et la valeur de sensibilité afin de déterminer une nécessité de transmission d'un signal de commande électronique.

2. Dispositif de levier de changement de vitesses selon la revendication 1, **caractérisé en ce que** le caractère non admissible d'un changement identifié de position du levier de changement de vitesses peut être identifié au moyen du dispositif d'évaluation (9) par évaluation de l'état de contact.

3. Dispositif de levier de changement de vitesses selon la revendication 1 ou 2, **caractérisé en ce qu'**un contact de la surface de préhension (15) avec la main droite peut être différencié d'un contact de la surface de préhension (15) avec la main gauche au moyen du dispositif d'évaluation (9) par évaluation de l'état de contact.

4. Dispositif de levier de changement de vitesses selon l'une quelconque des revendications précédentes, **caractérisé en ce que** la direction d'un mouvement, provoqué par la main, du levier de changement de vitesses (2) par rapport à la fixation (4) peut être déterminée au moyen du dispositif d'évaluation (9) par évaluation de l'état de contact.

5. Dispositif de levier de changement de vitesses selon l'une quelconque des revendications précédentes, **caractérisé en ce qu'**un contact de la surface de préhension (15) sur un côté de la surface de préhension peut être différencié d'un contact de la surface de préhension (15) sur un autre côté de la surface de préhension au moyen du dispositif d'évaluation (9) par évaluation de l'état de contact.

6. Dispositif de levier de changement de vitesses selon l'une quelconque des revendications précédentes, **caractérisé en ce que** la surface de préhension (15) est subdivisée en différentes zones de contact (23) et **en ce qu'**un contact de chacune des zones de contact (23) avec une personne peut être détecté au moyen du capteur de contact (16).

7. Dispositif de levier de changement de vitesses selon la revendication 6, **caractérisé en ce qu'**un modèle de contact obtenu en fonction de l'état de contact des zones de contact (23) peut être évalué au moyen du dispositif d'évaluation (9).

8. Dispositif de levier de changement de vitesses selon la revendication 7, **caractérisé en ce que** le modèle de contact peut être comparé à au moins un modèle de référence prédéfini au moyen du dispositif d'évaluation (9).

9. Dispositif de levier de changement de vitesses selon l'une quelconque des revendications 6 à 8, **caractérisé en ce que** le capteur de contact (16) comprend plusieurs éléments capteurs (24) au moyen desquels un contact avec une personne peut respectivement être détecté, dans lequel au moins l'un des éléments capteurs (24) est associé à chacune des zones de contact (23).

10. Dispositif de levier de changement de vitesses selon la revendication 9, **caractérisé en ce que** chacun des éléments capteurs (24) comprend au moins deux conducteurs électriques (19, 20) électriquement isolés l'un de l'autre et **en ce qu'**une variation d'au moins une propriété électrique entre les conducteurs (19, 20) de l'élément capteur respectif peut être détectée au moyen du dispositif d'évaluation (9).

11. Dispositif de levier de changement de vitesses selon l'une quelconque des revendications 1 à 9, **caractérisé en ce que** le capteur de contact (16) comprend au moins deux conducteurs électriques (19, 20) électriquement isolés l'un de l'autre et **en ce qu'**une variation d'au moins une propriété électrique entre les conducteurs (19, 20) peut être détectée au moyen du dispositif d'évaluation (9).

12. Dispositif de levier de changement de vitesses selon la revendication 10 ou 11, **caractérisé en ce que** la propriété électrique comprend la résistance ohmique, la résistance de courant alternatif ou la capacité entre les conducteurs (19, 20).

13. Dispositif de levier de changement de vitesses selon l'une quelconque des revendications 10 à 12, **caractérisé en ce que** les conducteurs électriques (19, 20) sont disposés sur ou en-dessous de la surface de préhension (15).

14. Dispositif d'évaluation (9) destiné à un dispositif de levier de changement de vitesses selon l'une quelconque des revendications précédentes, dans lequel le dispositif d'évaluation (9) peut être couplé électroniquement au capteur de contact (16) et comprend un circuit électronique comportant un processeur et un mémoire contenant un programme d'évaluation pouvant être exécuté par le processeur pour évaluer au moins les informations délivrées par le capteur de contact (16) au dispositif d'évaluation et concernant l'état de contact de la surface de préhension (15), dans lequel le dispositif d'évaluation (9) est conçu pour déterminer et stocker une valeur de référence pour la sensibilité du capteur de contact (16) sur la base des informations concernant l'état de contact lors d'un contact de la surface de préhension (15), puis pour déterminer une valeur de sensibilité sur la base des informations concernant l'état de contact lors d'un autre contact de la surface de préhension (15) et pour évaluer une comparaison entre la valeur de référence et la valeur de sensibilité afin de déterminer une nécessité de transmission d'un signal de commande électronique.

15. Procédé de commande électronique d'un dispositif pour véhicule au moyen d'un dispositif d'évaluation (9), notamment selon la revendication 14, dans lequel le dispositif d'évaluation (9) est couplé électroniquement à un capteur de contact (16) d'un dispositif de commande, dans lequel le capteur de contact (16) est disposé dans une zone d'une surface d'actionnement (15) du dispositif de commande et est approprié pour détecter un contact, notamment d'une personne, avec la surface d'actionnement (15) et pour délivrer au dispositif d'évaluation (9) des informations concernant l'état de contact de la surface d'actionnement (15), dans lequel le procédé comprend successivement
une étape (100) consistant à déterminer et à stocker une valeur de référence pour la sensibilité du capteur de contact (16) sur la base des informations concernant l'état de contact lors d'un contact de la surface d'actionnement (15),
une étape (200) consistant à déterminer une valeur de sensibilité sur la base des informations concernant l'état de contact lors d'un autre contact de la surface d'actionnement (15), et
une étape (300) consistant à évaluer une comparaison entre la valeur de référence et la valeur de sensibilité afin de déterminer une nécessité de transmission d'un signal de commande électronique.
